# EUROPÄISCHE PATENTSCHRIFT

(11) **EP 1 460 398 B1**
(45) Veröffentlichungstag und Bekanntmachung des Hinweises auf die Patenterteilung: **06.12.2006**
(21) Anmeldenummer: 04004775.5
(22) Anmeldetag: 02.03.2004
(51) Int. Cl.: G01L 1/22, G01L 1/18, G01L 1/16, H01L 41/113, G01B 7/16

(54) **Dehnungsmessfühler mit resistiven und piezoelektrischen dehnungsempfindlichen Elementen**
Strain sensor with resistive and piezoelectric strain-sensitive elements
Capteur de contrainte avec des éléments résistifs et piézoélectriques sensibles aux contraintes

(30) Priorität: 07.03.2003 DE 10310392
(43) Veröffentlichungstag der Anmeldung: 22.09.2004
(73) Patentinhaber: Hottinger Baldwin Messtechnik GmbH, 64293 Darmstadt (DE)
(72) Erfinder: Altwein, Michael, Dr., 64287 Darmstadt (DE); Haase, Karl-Heinz, Dr., 64319 Pfungstadt (DE)
(74) Vertreter: Behrens, Helmut

(56) Entgegenhaltungen:
- EP-A- 0 091 089
- CH-A- 357 564
- DE-A- 3 212 618
- DE-A- 3 512 095
- US-A- 3 585 415
- US-A- 4 990 815
- US-B1- 6 234 032

## Beschreibung

Die Erfindung betrifft einen Aufnehmer zur Ermittlung einer Dehnung gemäß dem Oberbegriff des Patentanspruchs 1.

Um kleinste Verformungen an bewegten oder unter mechanischer Spannung stehenden Körpern zu messen, haben sich dehnungsempfindliche Aufnehmer insbesondere solche mit Dehnungsmessstreifen bewährt. Zusammen mit präzisen elektronischen Auswerteschaltungen ermöglichen sie höchste Auflösung und Genauigkeit beim Bestimmen von dynamischen, quasistatischen und statischen Kräften und Spannungszuständen.

Derartige Aufnehmer mit Dehnungsmessstreifen sind aus dem Kochsiek, Handbuch des Wägens, 2. Auflage 1989, Seite 131 bis 134 bekannt. Dort sind Wägezellen nach dem Dehnungsmessstreifenprinzip offenbart, bei der die Dehnungsmessstreifen auf einer Messfederoberfläche aufgebracht sind. Dabei bestehen die Dehnungsmessstreifen aus einem Messgitter eines Widerstandsmaterials, das vorzugsweise auf eine folienartige Trägerschicht aufgedampft und dann die Messgitterstruktur ausgeätzt ist. Zur Dehnungsmessung wird dann die Trägerschicht auf ein Messfedermaterial aufgeklebt, bei dessen Dehnung sich der Widerstand des Dehnungsmessstreifens proportional zur Dehnung verändert. Neben den Aufnehmern aus Foliendehnungsmessstreifen sind auch Dünnfilm-Dehnungmeßstreifen bekannt, bei denen die Widerstandsbahn direkt auf eine isolierte Messfederoberfläche aufgedampft oder aufgesputtert werden.

Zur Bestimmung der am Federmaterial wirkenden Kräfte und Spannungszustände werden die Dehnungsmessstreifenaufnehmer zu Wheatston'schen Brücken verschaltet. Dazu sind diese mit einer permanenten Gleich- oder Trägerfrequenzspeisespannung zu versorgen. Insbesondere bei der Überwachung von Gebäudebelastungen, Erbebenspannungsermittlungen oder bei der Spannungsanalyse mit vielen Messstellen ist ein erheblicher Verkabelungsaufwand erforderlich, der bei weitem den reinen Aufwand für die Aufnehmer übertrifft. Durch den relativ hohen Strombedarf derartiger Messbrücken können diese auch kaum mit handhabbaren Batterien oder Akkus betrieben werden, so dass eine Speisung und Messwertübertragung über Funkstrecken für derartige langfristige Überwachungs- und Messaufgaben kaum möglich ist.

Zur Erfassung einer Dehnung oder einer Kraft sind auch induktive Wegaufnehmer (Kochsiek, Seite 128) bekannt, die mit hochohmigen Spulen ausgestattet werden können, um mit weniger Speiseenergie auszukommen. Dazu muß allerdings die zur Erfassung der Dehnung erforderliche Messfeder mit dem induktiven Wandler in Form der Tauchspulen verbunden werden. Eine derartige Vorrichtung ist aber meist zu großvolumig, so dass sie sich für viele Dehnungsmessaufgaben nicht eignet.

Eine weitere nahezu leistungslose Messung einer Dehnung mittels einer kapazitiven wegempfindlichen Wägezelle ist aus dem Kochsiek, Seite 128, 129 bekannt. Dabei wird bei einer Krafteinleitung der Abstand zweier isolierender Platten verändert und diese Kapazitätsänderung erfasst und ausgewertet. Als Dielektrikum wird dabei Luft eingesetzt, dessen Isolationswirkung begrenzt ist, so dass zur Aufladung eine permanente Spannungsquelle mit der kapazitiven Wägezelle verbunden sein muß. Hierzu sind aber auch meist Speisespannungsleitungen oder eine aufwendige batteriegesteuerte Spannungsversorgung notwendig, die einen hohen Montageaufwand oder Platzbedarf benötigt.

Aus dem Kochsiek, Seite 137 sind auch piezoelektrische Wägezellen bekannt, mit denen Dehnungen und Kräfte messbar sind.

Dazu werden mindestens zwei hochgradig isolierende monokristalline Quarzschichten aufeinander gelegt, bei denen eine einwirkende Kraft auf die Scheiben eine der Kraft proportionale Ladung hervorruft. Die Scheiben sind dabei mit Elektroden verbunden, die bei einer Krafteinwirkung eine Leerlaufspannung von einigen hundert Volt aufweisen, die der Kraft streng proportional ist. Allerdings nimmt dieses Spannungssignal bei einer statischen Belastung nach einer e-Funktion ab, so dass sich derartige Wägezellen für statischen Messaufgaben nicht eignen.

Aus der US 6.234.032 B1 ist bereits eine Vorrichtung zur Messung von Kräften bekannt, die zwei gleichartige Aufnehmerteile enthält, die eine Kompensation der Aufnehmerhysterese bewirken sollen. Dabei enthält der erste Aufnehmerteil einen quaderförmiges piezoelektrisches Element, dessen Stirnfläche mit einer Kraft beaufschlagt wird und dessen gegenüberliegende Stirnfläche sich auf einem stationären Basisteil abstützt. An einer Seitenfläche des piezoelektrischen Elements sind zusätzlich noch vier dehnungsempfindliche elektrische Widerstände in Brückenschaltung appliziert, die die Längsdehnung des piezoelektrischen Elements erfassen, die der eingeleiteten Kraft proportional ist. Zur Kompensation der Hysterese des piezoelektrischen Elements wird die Ausgangsspannung des ersten piezoelektrischen Elements auf das zweite unbelastete piezoelektrische Element geschaltet und deren Längenänderung durch die zweite Brückenschaltung erfasst und als Messwert angezeigt. Da derartige piezoelektrische Elemente aus keramischen Werkstoffen bestehen, sind sie für viele Anwendungen als Ersatz eines elastischen Messfedermaterials ungeeignet und als Teil eines Aufnehmers verhältnismäßig großvolumig.

Aus der US 3.585.415 ist ein Halbleiterbauelement als Druckbelastungsaufnehmer bekannt, bei dem zwischen den Silizium- oder Germanium-Haltleiterschichten eine dünne Schicht aus piezoelektrischen Material aufgebracht ist. Bei einer Druckbelastung erzeugt die piezoelektrische Schicht eine Spannung, die den Ausgangsstrom des Halbleiters entsprechend der Druckbelastung steuert. Da derartige Halbleiter mit piezoelektrischen Schichten sehr temperaturabhängig sind, müssen für genaue Kraftmessungen entweder die Temperatur konstant oder aufwendige Temperaturkompensationsschaltungen vorgesehen werden.

Der Erfindung liegt deshalb die Aufgabe zugrunde, Kräfte oder dadurch verursachte Dehnungen mit einem platzsparenden planaren Aufnehmer an Messfederoberflächen mit möglichst geringem Energiebedarf zu erfassen und in ein elektrisches Signal umzuwandeln.

Diese Aufgabe wird durch die im Patentanspruch 1 angegebenen Erfindungen gelöst. Weiterbildungen und vorteilhafte Ausführungsbeispiele der Erfindung sind in den abhängigen Ansprüchen angegeben.

Die Erfindung hat den Vorteil, dass durch die Kombination eines Dehnungsmessstreifenelements mit einem dehnungsempfindlichen piezoelektrischen Element eine Dehnungsmessung auf den Zeitpunkt einer Dehnungsänderung beschränkt werden kann, was auch gerade bei Langzeitüberwachungen nur wenig Messzeit und damit einen geringstmöglichen Energiebedarf erfordert. Derartige Überwachungsmessungen sind dann vorzugsweise auch durch Batteriespeiseschaltungen durchführbar, so dass eine aufwendige Verkabelung in vielen Fällen entfallen kann.

Die Erfindung hat weiterhin den Vorteil, dass durch die Kombination der beiden Aufnehmerelemente auch hochfrequente dynamische Belastungen erfassbar sind, die durch reine Dehnungsmessstreifenaufnehmer nicht festgestellt werden können. Durch die schichtweise Anordnung des planaren piezoelektrischen Aufnehmerteils neben den Dehnungsmessstreifenschichten ist auch eine platzsparende Anordnung auf einer gemeinsamen Trägerschicht oder direkt auf einem dehnungsempfindlichen Federmaterial möglich, so dass damit vorzugsweise auch die Messungen ausführbar sind, die sonst mit reinen Dehnungsmessstreifen erfolgen, ohne das dazu eine permanente Speisung notwendig ist.

Bei einer besonderen Ausbildung der Erfindung ist vorgesehen, daß zur Dehnungsmessung eine Schicht mit einer Vielzahl beabstandeter Elektroden oder mehrere nebeneinander angeordnete Schichten dehnungsempfindlichen piezoelektrischen Materials verwendet werden, dass den Vorteil besitzt, dass damit auf einfache Weise unmittelbar digitale Dehnungssignale erzeugbar sind. Dadurch sind aufwendige Analogdigitalwandler entbehrlich, die insbesondere bei hochfrequenten Dehnungsänderungen die Messsignalerfassung verfälschen und verzögern können. Da eine derartige abgestufte Dehnungsmessung mit mehreren piezoelektrischen Schichten oder Elektrodenabständen nahezu leistungslos erfolgt, sind diese Messsignale vorzugsweise mit batteriebetriebenen Spannungsquellen erzeugbar und insbesondere mittels Funkstrecken energiesparend übertragbar.

Die Erfindung wird anhand eines Ausführungsbeispiels, dass in der Zeichnung dargestellt ist, näher erläutert. Es zeigen:
- Fig. 1:: einen Dehnungsaufnehmer mit einem Dehnungsmeßstreifengitter und einer Struktur aus piezoelektrischem Material, und
- Fig. 2:: eine Ladungsverstärkerschaltung für eine dreiteilige Struktur eines dehnungsempfindlichen piezoelektrischen Materials.

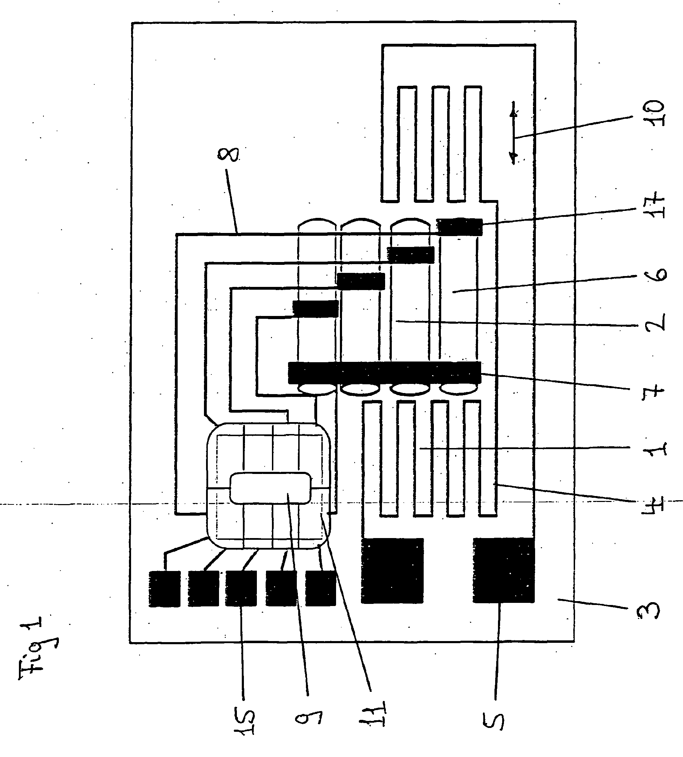

In Fig. 1 der Zeichnung ist ein Dehnungsaufnehmer für stationäre und dynamische Beanspruchungen dargestellt, der im wesentlichen aus einem Dehnungsmessstreifengitter 4 und vier parallelen Streifen 6 eines dehnungsempfindlichen piezoelektrischen Materials 2 mit abgestuften Elektrodenabständen besteht, die auf einem gemeinsamen Trägermaterial 3 aufgebracht sind.

Das Trägermaterial 3 ist eine herkömmliche Kunststofffolie, wie sie zur Herstellung von Foliendehnungsmessstreifen verwendet wird. Darauf ist eine Schicht elektrischen Widerstandsmaterials aufgebracht, aus der das Dehnungsmessstreifengitter 4 ausgeätzt ist. Dabei besteht das Dehnungsmessstreifengitter 4 aus zwei Teilbereichen, zwischen denen mehrere Streifen bzw. Schichten 6 aus dehnungsempfindlichem Material 2 vorgesehen sind. Die beiden Meßgitterteile 4 sind miteinander verbunden und über zwei Anschlusspunkte 5 mit einer externen Auswerteschaltung verbindbar.

Die im Zentrum der Trägerfolie 3 angeordneten vier Längsstreifen 6 aus piezoelektrischem Material 2 bestehen aus gleich langen, parallel nebeneinander angeordneten flachen Schichten 6, die auf die Trägerfolie 3 aufgeklebt sind. Jede der flachen Schichten enthält zwei Elektroden 7, 17, die jeweils verschiedene Abstände zueinander aufweisen. Die Abstandsänderung der verschiedenen Schichten 6 ist dabei konstant. Vorzugsweise sind die beiden Elektroden 7, 17 der längsten Schicht 6 etwa 5 mm beabstandet, wobei die übrigen um jeweils 0,5 mm geringere Elektrodenabstände aufweisen. Es ist aber auch möglich, die einzelnen Schichten 6 in verschiedenen Längen herzustellen und die Elektroden 7, 17 an den Endbereichen anzuordnen, um zu ähnlichen Elektrodenabständen zu gelangen.

Die einzelnen flachen Schichten 6 des piezoelektrischen Materials 2 können auch andere geometrischen Formen und Abmessungen aufweisen, wobei allerdings die Elektroden 7, 17 so vorgesehen sein müssen, daß an ihnen bei einer vorgegebenen Dehnung linear oder diskret abgestufte Spannungswerte bzw. Energien abgreifbar sind. Bei einer besonders homogenen Schicht 6 des dehnungsempfindlichen piezoelektrischen Materials 2 ist es auch möglich, nur eine in Dehnungsrichtung 10 verlaufende Schicht 6 vorzusehen, an der in linear oder diskret abgestuften Abständen mindestens drei beabstandete Elektroden 7, 17 angebracht sind. Bei entsprechenden Abständen sind dann bei einer bestimmten Dehnung mindestens zwei unterschiedlich hohe Spannungen abgreifbar, die vorgebbaren Belastungsstufen zugeordnet werden können.

Für verschiedene Anwendungsfälle kann es auch vorteilhaft sein, mehrere flache piezoelektrische Schichten 6 nebeneinander anzuordnen, die jeweils über mindestens drei oder eine Vielzahl abgestufter Elektroden 7, 17 verfügen. Bei unterschiedlich langen Schichten 6 oder unterschiedlich abgestuften Elektrodenabständen sind damit Signale unterschiedlicher Belastungsstufen abgreifbar, so daß mit verhältnismäßig wenig Schichten 6 eine Vielzahl von Belastungsstufen geschaffen werden können, mit der unmittelbar fein abgestufte digitale Belastungssignale erzeugbar sind.

Jede Schicht aus dem piezoelektrischen Material 2 besteht dabei vorzugsweise aus mehreren parallel nebeneinander angeordneten Fasern gleicher Länge, wie sie aus der DE 198 29 216 C1 bekannt sind. An unterschiedlich beabstandeten Bereichen ist jede Schicht 6 mit je einer Elektrode 7, 17 verbunden, die diese über Leiterbahnen 8 an eine flache elektronische Schaltung 9 auf der Trägerfolie 3 führt. Dabei sind auf der dargestellten Trägerfolie vier verschiedene Schichten 6 des piezoelektrischen Materials 2 mit abgestuften Elektrodenabständen angeordnet, die bei einer bestimmten Längsdehnung 10 unterschiedliche Energien bzw. Ausgangsspannungen zwischen den Elektroden 7, 17 erzeugen, deren Differenz exakt den Längenunterschieden proportional ist. Die elektronische Schaltung 9 besteht aus einem flachen integrierten Schaltkreis, der innerhalb von acht o-förmig angeordneten Kontaktelementen 11 vorgesehen ist und im wesentlichen vier Ladungsverstärker enthält.

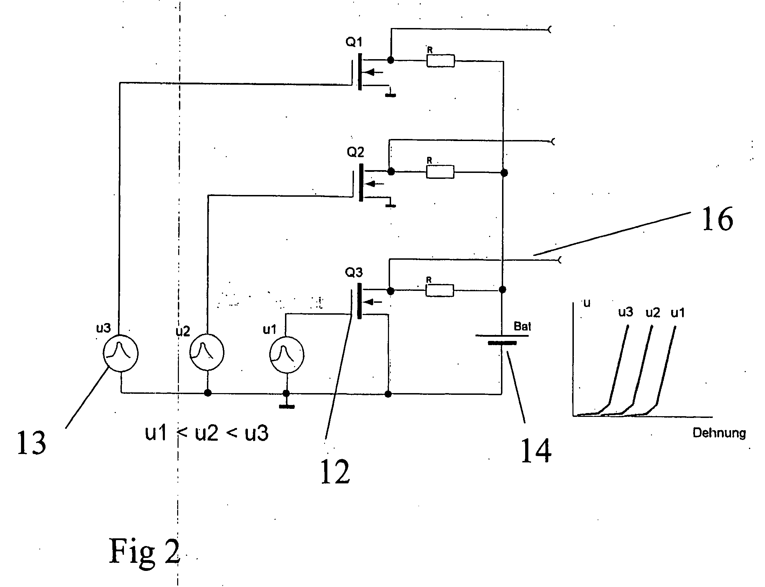

In Fig. 2 der Zeichnung sind drei entsprechende Ladungsverstärker 12 schaltbildmäßig dargestellt, an die drei Streifen bzw. Schichten 6 piezoelektrischen Materials 2 mit unterschiedlich beabstandeten Elektroden 7, 17 angeschlossen sind. Die drei Schichten 6 piezoelektrischen Materials 2 sind dabei schematisch als Impulsgeneratoren 13 mit verschieden großen Spannungsimpulsen u1, u2, u3 angegeben, wie sie bei einer bestimmten Dehnung eines piezoelektrischen Materials 2 mit unterschiedlich beabstandeter Elektroden 7, 17 auftreten.

Diese drei piezoelektrischen Schichten 2 sind mit jeweils einem ladungsgesteuerten Verstärkungsbauelement (FET) Q1, Q2, Q3 verbunden. Die Verstärkungsbauelemente Q1, Q2, Q3 sind an eine leistungsarme Batterie 14 angeschlossen, und geben an ihrem Ausgangswiderstand R eine Ausgangsspannung ab, die höchstens der Batteriespannung entspricht. Bei gleichen Bauelementen der elektronischen Ladungsverstärker 12 und linear abgestuften Elektrodenabständen an den piezoelektrischen Schichten 2 werden von den Ladungsverstärkern 12 nur dann Ausgangssignale erzeugt, wenn dessen Eingangsimpulse eine vorgegebene Eingangsspannung überschreiten. Dadurch sind mehrstufige Ausgangssignale gleicher Höhe erzeugbar, die auf eine mehrstufige Dehnung abstimmbar sind und so ein digitales vierstufiges Ausgangssignal bilden können. Dies ist gleichfalls mit einer homogenen Schicht 6 piezoelektrischen Materials 2 möglich, das über fünf beabstandete Elektroden 7, 17 verfügt.

Die Erfindung ist aber auch mit einem einstufigen Ladungsverstärker 12 ausführbar, durch den lediglich die Anschaltung bei Überschreitung einer vorgegebenen Dehnung oder Krafteinwirkung vorgesehen ist, um nur in diesem Fall den Dehnungsmessstreifen 1 zu aktivieren, wodurch der Energieverbrauch gering gehalten werden kann. In einem derartigen Fall wäre die Erfindung so ausgebildet, dass nur ein Streifen 6 des dehnungsempfindlichen piezoelektrischen Materials 2 mit zwei beabstandeten Elektroden 7, 17 zwischen den Dehnungsmeßstreifenteilen 4 vorgesehen ist. Dabei dient das piezoelektrische Dehnungsaufnehmerelement 6 lediglich dazu, dass Dehnungsmessstreifengitter 4 bei festgestellter Krafteinleitung mit einer Speisespannung zu versorgen, um eine Kurz- oder Langzeitmessung vorzubereiten. Der Dehnungsaufnehmer ist dabei mit einer programmgesteuerten externen Auswertevorrichtung zu verbinden, die über die Kontaktanschlüsse 5,15 anschaltbar ist. Diese externe elektronische Auswertevorrichtung könnte zur Messsignalverarbeitung entweder mit einer leitungsgebundenen oder batteriebetriebenen Speisespannungsversorgung ausgestattet sein, die sowohl den Ladungsverstärker 12 als auch die Dehnungsmessstreifenschaltung 1 speist.

Allerdings könnte die dehnungsbedingte Spannung an den piezoelektrischen Streifen 6 auch direkt zur Ansteuerung der externen Auswertevorrichtung und Speiseschaltungsaktivierung vorgesehen sein. Insbesondere bei der Langzeitüberwachung von Gebäudebelastungen und Erbebenerfassungen oder zur Spannungsanalyse bei unregelmäßigen Belastungserscheinungen wird die genaue Messung über die Dehnungsmessstreifenschaltung 1 erfolgen, die nur bei Überschreitung von vorgegebenen Dehnungsänderungen eingeleitet wird. Dazu könnten auch batteriegespeiste externe Auswertevorrichtungen vorgesehen werden, die nur kurzzeitig anschaltbar sind und die gemessenen Dehnungswerte über Funkstrecken an zentrale Auswertestationen übermitteln. Hierzu wäre eine Verkabelung entbehrlich, was insbesondere bei Vielstellenmessungen vorteilhaft ist.

Dazu ist der Dehnungsaufnehmer mit den Dehnungsmessstreifen 1 und mindestens einem piezoelektrischen Aufnehmerelement 6 mit zwei beabstandeten Elektroden 7, 17 an einer belastungsrelevanten Messfeder oder einem zu erfassenden dehnungsempfindlichen Bauteil appliziert. Dieser Aufnehmer ist dann über seine Anschlusskontakte 5,15 mit einer externen programmgesteuerten Auswertevorrichtung verbunden, die vorzugsweise batteriegespeist ist und die erfassten Messwerte über eine Funkverbindung weiterleitet. Diese externe Auswertevorrichtung ist dabei so ausgebildet, dass sie ohne eine Dehnungsänderung den Dehnungsmessstreifen 1 nicht mit einer Speisespannung versorgt und damit energielos in Wartestellung verbleibt. Lediglich der Ladungsverstärker 12 mit seinem piezoelektrischen dehnungsempfindlichen Material 2 ist dabei an die Speisespannungsversorgung 14 angeschlossen aber so lange stromlos betreibbar, wie keine Dehnungsänderung von vorgegebener Größe eintritt.

Erfolgt hingegen eine derartige Dehnung, wird in der piezoelektrischen Schicht 2 eine elektrische Ladung bzw. Spannung erzeugt und bei Überschreitung eines vorgegebenen Wertes ein Stromimpuls am Ausgang 16 des Ladungsverstärkers 12 hervorgerufen. Durch dieses Messsignal wird von der programmgesteuerten externen Auswertevorrichtung das Dehnungsstreifengitter 4 in seiner Wheatston'schen Brückenschaltung mindestens kurzzeitig an eine Speisespannung geschaltet. Dadurch wird durch die Dehnung im Messgitter 4 die Brücke so verstimmt, dass ein analoges Messsignal erzeugt wird, das der Dehnung bzw. der in der Messfeder erzeugenden Krafteinwirkung proportional ist. Dieses kurzzeitig erfasste Messsignal wird dann in der programmgesteuerten Auswertevorrichtung zwischengespeichert und vorzugsweise über eine Funkstrecke zu einer weiteren zentralen Auswertestation übertragen. Dabei wird die Dehnungsmessung durch den Dehnungsmeßstreifen 1 nur kurzzeitig durchgeführt und erst dann wiederholt, wenn durch den Aufnehmerteil des piezoelektrischen Elements 6 wieder eine Dehnungsänderung in vorgegebener Höhe erfasst wird. Allerdings kann eine Messung der genauen statischen und dynamischen Dehnung mittels des Dehnungsmessstreifenaufnehmerteils 1 auch in vorgegebenen zeitlichen Abständen und zusätzlich bei einer durch das piezoelektrische Element 6 erfassten dynamischen Dehnungsänderung durchgeführt werden. Dadurch sind auch genaue Langzeitüberwachungen möglich, ohne eine permanente Speisung der Aufnehmerschaltung zu gewährleisten. Derartige Schaltungen sind dann energiesparend auch im Batteriebetrieb möglich, ohne dass aufwendige Verkabelungsarbeiten notwendig werden.

Bei dem dargestellten Ausführungsbeispiel sind allerdings vier abgestuft kontaktierte Piezoelementstreifen 6 vorgesehen, durch die der Dehnungsaufnehmer eine genaue statische und hochfrequente dynamische Dehnungsmessung ermöglicht. Insbesondere bei der Spannungsanalyse im Flugzeugbau werden verstärkt hochfrequente Dehnungsänderungen ausgewertet, die mit Hilfe von Dehnungsmessstreifengittern 4 nicht immer genau erfassbar sind. Diese dynamischen Belastungen sind deshalb mit dem erfindungsgemäßen Dehnungsaufnehmer neben den statischen Belastungen ermittelbar und sowohl einzeln als auch gemeinsam im Rahmen einer Spannungsanalyse auswertbar. Dazu wird der piezoelektrische Streifen 6 mit dem längsten Kontaktabstand oder Ausdehnung in Dehnungsrichtung 10 zunächst zur Einschaltung des Dehnungsmeßstreifenaufnehmerteils 1 verwendet, wie vorstehend bereits beschrieben. Dieser piezoelektrische Aufnehmerteil 6 besitzt die größte Empfindlichkeit, da die dehnungsbedingte Ausgangsspannung des Piezoelements 6 direkt proportional zu dessen Elektrodenabstand 7, 17 ist. Es wird deshalb eine Dehnungsänderung vorgegeben, die eine Dehnungsmessung mit dem Dehnungsmessstreifen 1 aktiviert, die mindestens der geringsten statischen Dehnung entspricht, die erfasst werden soll.

Da mit dem piezoelektrischen Aufnehmerteil dynamische Belastungsänderungen bis in den Ultraschallbereich bis 1 MHz erfassbar sind, werden damit verstärkt hochfrequente Belastungsspitzen und Schädigungsereignisse im Flugzeugbau ermittelt, die zu Materialermüdung führen können und deshalb auch speziell ausgewertet werden. Dazu sind schnell erfassbare summarische Auswertungen vorteilhaft, die lediglich die Anzahl verschieden hoher Belastungsstufen angeben sollen. Im vorliegenden Ausführungsbeispiel wurden deshalb vier piezoelektrische Dehnungselemente 6 vorgesehen, mit der die direkte Überschreitung von vier dynamischen Belastungsgrenzen ermittelbar ist. Dazu können die Dehnungsaufnehmer unmittelbar auf den belastungsrelevanten federelastischen Bauteilen appliziert werden und mit einer vorgesehenen externen Auswertevorrichtung verbunden sein. Dabei werden die Längen oder die Elektrodenabstände der piezoelektrischen Schichten 2 so gewählt, dass sie die gesamte Bandbreite der vorkommenden Dehnungen erfassen können. Die Stufung kann dabei linear erfolgen, nach der beispielsweise eine Längenänderung der piezoelektrischen Schichten 2 oder deren Elektrodenabstände von 0,5 mm gewählt wird, wonach eine konstante Belastungsänderung zu einer linearen Spannungsänderung führt.

Werden die vier piezoelektrischen Schichten 6 mit vier gleichartigen Ladungsverstärkern 12 auf der planaren Trägerschicht 3 verbunden, so erhält man unmittelbar digitale Ausgangssignale, die unmittelbar anzeigbar oder weiterverarbeitbar gespeichert werden können. Dabei ist es insbesondere vorteilhaft, dass nicht nur bei einer Dehnungsänderung die statische Dehnung mit einer geringen Speiseenergie gemessen werden kann, sondern gleichzeitig unter minimalem Energieeinsatz auch die dynamische Dehnung in ihrem Betragswert stufenweise ermittelbar ist. Insbesondere bei der Spannungsanalyse im Flugzeugbau ist es wichtig, die Anzahl der verschiedenen Belastungshöhen zu kennen, die durch die vier piezoelektrischen Aufnehmerteile 6 erfasst werden können. Durch schnelle Zähleinrichtungen ist auf einfache Weise auch eine dynamische Belastungsanalyse ausführbar, durch die schnell auswertbare Messergebnisse vorliegen. Dabei gestattet insbesondere die gemeinsame Auswertung von statischen und dynamischen Belastungsgrößen ein genaueres Bild von der gesamten Materialbelastung, die durch den erfindungsgemäßen Aufnehmer erst ermöglicht wird.

Bei einer bevorzugten Ausführungsform ist vorgesehen, die vier einzelnen gleich langen Schichten 6 noch jeweils mit einer Vielzahl von Elektroden 7, 17 mit gestuften Abständen zu versehen. Dabei können die gestuften Abstände auch auf vorgegebene Belastungsstufen abgestimmt werden, so daß unmittelbar verschieden kodierbare digitale Ausgangssignale an den Elektroden 7, 17 oder den Ladungsverstärkern 12 abgreifbar sind. Hiermit sind dann fein gestufte Auflösungen erzielbar, die auch eine verhältnismäßig genaue digitale Dehnungs- oder Kraftmessung ermöglichen. Mit derartigen Dehnungsaufnehmern auf vorgegebenen Messfedern mit piezoelektrischen Schichten 2 bis zu 50 mm Länge sind dadurch auch Wägezellen für dynamische Gewichts- oder Kraftbelastungen herstellbar.

## Patentansprüche

1. Aufnehmer zur Ermittlung einer Dehnung mit strukturierten Widerstandsbahnen (4), die direkt oder mittels eines folienartigen Trägermaterials (3) auf einem Messfedermaterial applizierbar sind, **dadurch gekennzeichnet, dass** auf der Trägerschicht (3) oder dem Messfedermaterial von den strukturierten Widerstandsbahnen (4) beabstandet zusätzlich mindestens eine flache Schicht (2) aus einem piezoelektrischem dehnungsempfindlichen Material in einer Ebene zu den Widerstandsbahnen (4) aufgebracht ist, an der an in Dehnungsrichtung(10) beabstandeten Stellen Elektroden (7, 17) angebracht sind, an denen eine Spannung abgreifbar ist, die einer Dehnungsänderung proportional ist.

2. Aufnehmer nach Anspruch 1, **dadurch gekennzeichnet, dass** die Widerstandsbahnen aus zwei Messgitterteilen (4) bestehen, die miteinander verbunden sind und zwischen denen mindestens eine Schicht (6) aus piezoelektrischem Material (2) angeordnet ist.

3. Aufnehmer nach Anspruch 1 oder 2, **dadurch gekennzeichnet, daß** der Aufnehmerteil aus dem dehnungsempfindlichen piezoelektrischen Material aus einer flachen Schicht (6) mit mindestens drei in Dehnungsrichtung beabstandeten Elektroden (7, 17) und/oder aus mehreren nebeneinander angeordneten flachen Schichten (6) besteht, wobei die einzelnen Schichten unterschiedliche flache Geometrien oder Abmessungen und/oder unterschiedliche Elektrodenabstände in Dehnungsrichtung (10) aufweisen.

4. Aufnehmer nach einem der vorhergehenden Ansprüche, **dadurch gekennzeichnet, dass** der Aufnehmerteil aus dem piezoelektrischem Material (2) aus mehreren nebeneinander angeordneten flachen Schichten (6) unterschiedlicher Länge oder gleicher Länge aber unterschiedlich beabstandeter Elektroden (7, 17) besteht, die parallel in Dehnungsrichtung (10) ausgerichtet sind und bei einer bestimmten Dehnung abgestufte Ausgangsspannungen liefern.

5. Aufnehmer nach einem der vorhergehenden Ansprüche, **dadurch gekennzeichnet, dass** die einzelnen Schichten (6) aus nebeneinander angeordneten Fasern piezoelektrischen Materials (2) gleicher Länge bestehen, die auf einer Trägerfolie (3) oder dem Federmaterial aufgeklebt sind.

6. Aufnehmer nach einem der vorhergehenden Ansprüche, **dadurch gekennzeichnet, dass** die Elektroden (7, 17) der verschiedenen Abstände und/oder Schichten (6) des piezoelektrischen Materials (2) mit einer planaren elektronischen Auswerteschaltung (9) verbunden sind, die auf der Trägerfolie (3) angeordnet ist und mindestens einen elektronischen Ladungsverstärker (12) enthält.

7. Aufnehmer nach einem der vorhergehenden Ansprüche, **dadurch gekennzeichnet, dass** auf der Trägerfolie (3) oder direkt auf dem Federmaterial isolierende Anschlusselemente (5,15) angeordnet sind, durch die die Dehnungsmessstreifen (1) und die piezoelektrischen Elemente (6) mit einer externen Auswertevorrichtung verbindbar sind.

8. Aufnehmer nach einem der vorhergehenden Ansprüche, **dadurch gekennzeichnet, dass** die Ladungsverstärker (12) eingangsseitig mit den verschieden beabstandeten Elektroden (7, 17) und/oder piezoelektrischen Schichten (6) verbunden sind und gleichartige Verstärkerbauteile (Q1, Q2, Q3, R) aufweisen und am Ausgang (16) digitale Messsignale abgeben, die einer vorgegebenen Belastungsstufe entsprechen.

## Claims

1. A sensor for the determination of an elongation including structured resistive tracks (4) which are applicable directly or by means of a film-like carrier material (3) to a measuring spring material, **characterized in that** at least one flat layer (2) consisting of a piezoelectric strain-sensitive material is additionally deposited on the carrier layer (3) or the measuring spring material, said layer being spaced from the structured resistive tracks (4) and in a plane relative to the resistive tracks (4), wherein electrodes (7, 17) from which a voltage is derivable that is proportional to a change of elongation are mounted on said layer at locations spaced in the direction of elongation (10).

2. A sensor in accordance with Claim 1, **characterized in that** the resistive tracks consist of two measuring grid parts (4) which are connected together and between which there is arranged at least one layer (6) of piezoelectric material (2).

3. A sensor in accordance with Claim 1 or 2, **characterized in that** the sensor part consisting of the strain-sensitive piezoelectric material consists of a flat layer (6) having at least three electrodes (7, 17) that are spaced in the direction of elongation and/or of several mutually adjacent flat layers (6), wherein the individual layers exhibit different flat geometries or dimensions and/or different electrode spacings in the direction of elongation (10).

4. A sensor in accordance with any of the preceding Claims, **characterized in that** the sensor part consisting of the piezoelectric material (2) consists of several mutually adjacent flat layers (6) of different length or of equal length but differently spaced electrodes (7, 17), which are aligned in parallel with the direction of elongation (10) and supply stepped output voltages for a certain elongation.

5. A sensor in accordance with any of the preceding Claims, **characterized in that** the individual layers (6) consist of mutually adjacent fibres of piezoelectric material (2) of equal length which are adhered to a carrier film (3) or the spring material.

6. A sensor in accordance with any of the preceding Claims, **characterized in that** the electrodes (7, 17) of differing spacings and/or layers (6) of the piezoelectric material (2) are connected to a planar electronic evaluation circuit (9) which is arranged on the carrier film (3) and contains at least one electronic charge amplifier (12).

7. A sensor in accordance with any of the preceding Claims, **characterized in that** isolating terminal elements (5,15) are arranged on the carrier film (3) or directly on the spring material, the resistance strain gauges (1) and the piezoelectric elements (6) being connectable thereby to an external evaluation device.

8. A sensor in accordance with any of the preceding Claims, **characterized in that** the input sides of the charge amplifiers (12) are connected to the differently spaced electrodes (7, 17) and/or piezoelectric layers (6) and comprise similar type amplifier components (Q1, Q2, Q3, R) and deliver digital measuring signals at the output (16) which correspond to a given load level.

## Revendications

1. Capteur pour détecter un allongement avec des bandes de résistance (4) structurées, qui peuvent être appliquées directement ou au moyen d'un matériau support (3) de type film sur un matériau de ressort de mesure, **caractérisé en ce que** sur la couche support (3) ou le matériau de ressort de mesure est placée à distance des bandes de résistance (4) structurées, est appliquée en supplément au moins une couche (2) plane à base d'un matériau piézo-électrique et sensible en allongement dans un plan par rapport aux bandes de résistance (4), sur lequel sont placées des électrodes (7, 17) en des endroits espacés dans le sens d'allongement (10), sur lesquelles on peut prélever une tension qui est proportionnelle à la variation de l'allongement.

2. Capteur selon la revendication 1, **caractérisé en ce que** les bandes de résistance se composent de deux parties de grille de mesure (4) qui sont reliées entre elles et entre lesquelles est disposée au moins une couche (6) à base de matériau piézo-électrique.

3. Capteur selon la revendication 1 ou 2, **caractérisé en ce que** la partie capteur à base de matériau piézo-électrique et sensible à l'allongement est constituée d'une couche (6) plane avec au moins trois électrodes (7, 17) espacées dans le sens de l'allongement et/ou de plusieurs couches (6) plates disposées les unes à côté des autres, les couches individuelles présentant différentes géométries planes ou dimensions et/ou différents espacements d'électrodes dans le sens d'allongement (10).

4. Capteur selon l'une quelconque des revendications précédentes, **caractérisé en ce que** la partie capteur à base du matériau (2) piézo-électrique est constituée de plusieurs couches (6) planes disposées les unes à côté des autres de longueur différente ou de longueur identique, mais d'électrodes (7, 17) espacées différemment, qui sont orientées parallèlement dans le sens de l'allongement (10) et fournissent pour un allongement défini des tensions de sortie échelonnées.

5. Capteur selon l'une quelconque des revendications précédentes, **caractérisé en ce que** les couches (6) individuelles se composent de fibres disposées les unes à côté des autres de matériau (2) piézo-électrique de longueur identique, qui sont collées sur un film support (3) ou sur le matériau de ressort.

6. Capteur selon l'une quelconque des revendications précédentes, **caractérisé en ce que** les électrodes (7, 17) des différents espacements et/ou des différentes couches (6) du matériau (2) piézo-électrique sont reliées à un circuit d'analyse (9) électronique planaire, qui est disposé sur le film support (3) et contient au moins un amplificateur de charge (12) électronique.

7. Capteur selon l'une quelconque des revendications précédentes, **caractérisé en ce que** sur le film support (3) ou directement sur le matériau de ressort sont disposés des éléments de branchement (5, 15) isolants par lesquels les jauges d'allongement (1) et les éléments (6) piézo-électriques peuvent être reliés à un dispositif d'analyse externe.

8. Capteur selon l'une quelconque des revendications précédentes, **caractérisé en ce que** les amplificateurs de charge (12) sont reliés côté entrée aux électrodes (7, 17) espacées différemment et/ou aux couches (6) piézo-électriques et présentent des composants amplificateurs (Q1, Q2, Q3, R) similaires et émettent à la sortie (16) des signaux de mesure numériques qui correspondent à un niveau de charge prédéfini.
